# EUROPEAN PATENT APPLICATION

(11) **EP 3 951 044 A1**
(43) Date of publication of application: **09.02.2022**
(21) Application number: 20783523.2
(22) Date of filing: 27.03.2020
(51) Int. Cl.: D06M 101/40, C08J 5/04, D06M 11/45, D06M 11/74, D06M 11/79, D06M 15/55, D06M 23/08

(54) **METHOD FOR MANUFACTURING AN OPENED CARBON FIBER BUNDLE, AND FIBER REINFORCED COMPOSITE MATERIAL**

(30) Priority: 29.03.2019 JP 2019069042
(71) Applicant: SEKISUI CHEMICAL CO., LTD., Osaka-shi Osaka 530-8565 (JP)
(72) Inventor: NAKATSUKA Kazuki, Kyoto-shi, Kyoto 601-8105 (JP)
(74) Representative: Ter Meer Steinmeister & Partner
(86) International application number: PCT/JP2020/014382
(87) International publication number: WO 2020/203925

(57) **Abstract**

[Problem]

Provided is a method for producing an opened fibre bundle which enables the production of an opened fibre bundle having a good opened state, excellent resin impregnation properties, and excellent compatibility with a matrix resin.

[Problem to be Solved]

Disclosed is a method for producing an opened carbon fibre bundle, comprising the step of bringing a carbon fibre bundle comprising a plurality of carbon fibres to which a sizing agent is attached into contact with a fibre opening solution comprising particles having an average particle size (d50) of 1 µm to 30 µm and an organic solvent.

## Description

### BACKGROUND OF THE INVENTION

### [Field of the Invention]

The present invention relates to a method for producing an opened carbon fibre bundle using carbon fibres as reinforcing fibres, and a fibre reinforced composite material using the same.

### [Background Art]

Since a fibre reinforced composite material in which a matrix resin is reinforced with reinforcing fibres such as carbon fibres is of light weight while having excellent strength, rigidity, and dimensional stability, etc., it is widely used in various fields such as office equipment, automobiles, aircrafts, vehicles, computers such as housings of IC trays and laptops, water stops, and windmill blades, and its demand is increasing year by year.

Since the carbon fibres used in the fibre reinforced composite material have different chemical compositions and molecular structures from those of the matrix resin, there is a problem that theoretical strength cannot be obtained because compatibility with the matrix resin is low and the bonding interface between the carbon fibres and the matrix resin becomes a brittle point.

A fibre reinforced composite material using a thermoplastic resin as the matrix resin is obtained by molding compound pellets via various methods such as injection molding, injection compression molding, extrusion molding, and press molding. In these molding methods, reinforcing fibres are often used in the form of a fibre bundle (tow). When the reinforcing fibres are used in the form of a fibre bundle, the open state of the fibre bundle greatly affects the impregnation of the thermoplastic resin, and the impregnation greatly affects the mechanical strength of the fibre reinforced composite material.

For example, when producing a fibre reinforced composite material using a thermoplastic resin as a matrix resin, a method generally used is in which a film made of the thermoplastic resin and a reinforcing fibre bundle are heated under pressure (film impregnation method). In this case, if the opening between the carbon fibres constituting the reinforcing fibre bundle is insufficient, the thermoplastic resin is not sufficiently impregnated between the carbon fibres, and it is known that the mechanical strength of the fibre reinforced composite material decreases due to the resin-free portion (void portion).

Therefore, conventionally, various attempts have been made to improve the impregnation property of the thermoplastic resin into the carbon fibre bundle by improving the compatibility between the carbon fibre and the matrix resin or by carrying out fibre opening treatment to widen the spacing between the carbon fibres. For example, Patent Documents 1 and 2 disclose that a sizing agent composed of synthetic resin particles is adhered to the fibre surface of the carbon fibre bundle. In addition, Patent Document 3 discloses a carbon fibre bundle in which silica particles are adhered to the surface by amorphous carbon by firing after carbon fibres are brought into contact with a naphthoxazine monomer solution containing colloidal silica having a particle size of 80 to 150 nm, water and ethanol.

### [Prior Art Documents]

### [Patent Documents]

Patent Document 1: JP2013-177705 A1
Patent Document 2: JP2014-122439 A1
Patent Document 3: JP2015-93883 A1

### SUMMARY OF THE INVENTION

### [Problems to be Solved by the Invention]

However, as disclosed in Patent Documents 1 and 2, when a thermoplastic resin sheet and a reinforcing fibre bundle are pressurized while heating, in the carbon fibre having synthetic resin particles adhered to the surface, the synthetic resin particles are destroyed or melted by pressure or heat. Therefore, even if the carbon fibre is opened by the synthetic resin particles, it is difficult to maintain the opened state sufficiently for the time until the impregnation of the resin is completed, and as a result, there is a problem that the thermoplastic resin cannot be sufficiently impregnated between the carbon fibres.

Since the carbon fibre bundle described in Patent Document 3 includes a polymerization step of a naphthoxazine resin and a step of carbonizing the same, there is a problem that the raw material cost and productivity per hour are low, and there is also a problem that it is difficult to completely impregnate the carbon fibre bundle when a thermoplastic resin having a high viscosity is used as a matrix resin because the opening width between the fibres is small.

The present invention has been made in view of the above problems, and it is an object of the present invention to provide a method for producing an open fibre bundle that enables to obtain the open fibre bundle in high productivity having a good fibre opening state, an excellent resin impregnation property, and excellent compatibility with a matrix resin.

### [Means for solving the problem]

As a result of intensive research, the inventors have found that the above-mentioned problems can be solved by bringing a carbon fibre bundle to which a sizing agent is adhered into contact with an organic solvent containing particles having a specific particle size, and have thus completed the following invention. In other words, the gist of the present invention is as follows.

[1] A method for producing an opened carbon fibre bundle comprising the step of bringing a carbon fibre bundle comprising a plurality of carbon fibres to which a sizing agent is attached into contact with a fibre opening solution comprising particles having an average particle size (d50) of 1 µm to 30 µm and an organic solvent.
[2] The method for producing an opened carbon fibre bundle according to [1], wherein the sizing agent comprises an epoxy resin.
[3] The method for producing an opened carbon fibre bundle according to [1] or [2], wherein the particles comprise at least one selected from the group consisting of silica particles, alumina particles, talc, and amorphous carbon particles.
[4] The method for producing an opened carbon fibre bundle according to any one of [1] to [3], wherein the organic solvent comprises at least one selected from the group consisting of alcohols having 1 to 10 carbon atoms, ketones having 1 to 6 carbon atoms, sulfoxides having 1 to 10 carbon atoms, esters having 1 to 6 carbon atoms, ethers having 1 to 10 carbon atoms, and halogenated hydrocarbons having 1 to 6 carbon atoms.
[5] An opened carbon fibre bundle wherein particles having an average particle size (d50) of 1 µm to 30 µm are adhered to the surface of the carbon fibre by a sizing agent.
[6] An opened carbon fibre bundle according to [5], wherein the sizing agent comprises an epoxy resin.
[7] A fibre reinforced composite material comprising an opened carbon fibre bundle according to [5] or [6] and a matrix resin.
[8] The fibre reinforced composite material according to [7], wherein the matrix resin comprises at least one selected from the group consisting of a polyolefin resin, a vinyl chloride resin, and a polyether ether ketone resin.

### [Effect of the invention]

According to the present invention, an opened carbon fibre bundle having a good opened state and excellent resin impregnation property can be produced with high productivity. A fibre reinforced composite material obtained by impregnating a matrix resin into the opened carbon fibre bundle obtained by the production method of the present invention has small unimpregnated portion of the resin and excellent interfacial adhesion strength between the fibre and the resin, and therefore has high mechanical properties.

### BRIEF DESCRIPTION OF THE DRAWINGS

Fig. 1 shows an observed image of the surface of the opened carbon fibre bundle in Example 1-1.
Fig. 2 shows an observed image of another position of the surface of the opened carbon fibre bundle in Example 1-1.

### MODE FOR CARRYING OUT THE INVENTION

One example of a preferred embodiment of the present invention will be described with reference to the drawings below. However, the embodiments described below are examples for describing the present invention, and the present invention shall not be limited to the embodiments described below in any way.

### [Opened Carbon Fibre Bundle]

The opened carbon fibre bundle comprises a carbon fibre bundle comprising a plurality of carbon fibres to which a sizing agent is adhered, and particles arranged between the carbon fibres. It is preferable that at least a part between the carbon fibres have a fibre interval of 1 µm or more, and more preferably 3 µm or more.

### (Carbon fibre)

Examples of the carbon fibre used in the present invention include PAN-based carbon fibre, PITCH-based carbon fibre and the like, and PAN-based carbon fibre is preferably used. The average diameter of the carbon fibre is preferably 4 µm or more, more preferably 6 µm or more. The average diameter of the carbon fibre is preferably 30 µm or less, more preferably 20 µm or less. In the present invention, the average diameter of the carbon fibre is an arithmetic average value of the fibre diameters of 100 carbon fibres selected randomly. In addition, the fibre diameter refers to the diameter of a cross-section (substantially circular) in a cross-section along a direction orthogonal to the longitudinal direction of the fibre.

Each carbon fibre is generally a single fibre (filament), and a plurality of carbon fibres are gathered together to form a carbon fibre bundle (tow). The number of carbon fibres forming each carbon fibre bundle (the number of filaments contained in one strand) is usually 1000 or more, preferably 3000 or more, more preferably 12000 or more, and further preferably 24000 or more. On the other hand, the upper limit is not particularly limited, but is usually 100000 or less, preferably 50000 or less, more preferably 48000 or less, and further preferably 30000 or less.

In general, as the number of filaments in the carbon fibre bundles increases, the mechanical properties per filament and the impregnation property of the resin tend to decrease, but since the price per mass of the carbon fibre bundles also decreases, it is possible to select a carbon fibre bundle having an appropriate number of filaments depending on the application.

When a unidirectional continuous fibre is used, the number of carbon fibre bundles used in the present invention is preferably 48000 to 100000, and when a woven carbon fibre bundle is used, the number of carbon fibre bundles used is preferably 12000 to 48000.

The carbon fibre bundle may be used in various forms. For example, it may be used in forms of unidirectional continuous fibres (UniDirection fibres) in which a plurality of fibre bundles is oriented in one direction, a woven fabric formed by weaving a plurality of fibre bundles, a knitted fabric formed by knitting fibre bundles, a nonwoven fabric formed by a plurality of fibre bundles and thermoplastic resin fibres, and the like. Among these, unidirectional continuous fibres and woven fabrics are preferred, and a woven fabric having a high mechanical property in the longitudinal and lateral directions is more preferred. The woven fabric may be woven by a plain weave, a twill weave, a satin weave or the like, and a plain weave having isotropy or a twill weave is preferable. Preferred as the knitted fabric is a non-crimp fabric in which the fibres are arranged in a straight advancing direction in each fibre orientation direction.

Further, without particular limitation, a plurality of carbon fibre bundles is preferably in the form of a sheet. When the reinforcing fibre bundles are in a sheet form, the basis weight is 20 to 800 g/m², preferably 100 to 400 g/m². When the basis weight of the reinforcing fibre bundles is 20 g/m² or more, the mechanical strength improves of the fibre reinforced composite material formed by using the opened carbon fibre bundle according to the present invention. When the basis weight of the reinforcing fibre is 800 g/m² or less, the matrix resin can be uniformly impregnated between the carbon fibres, and the mechanical strength of the fibre reinforced composite material improves. The basis weight is preferably 150 to 300 g/m².

### (Sizing agent)

The sizing agent to be adhered to the carbon fibre of the present invention can be selected in accordance with the matrix resin used for the fibre reinforced composite material. For example, epoxy resin, epoxy-modified polyurethane resin, polyester resin, phenol resin, polyamide resin, polyurethane resin, polyimide resin, polyvinyl alcohol resin, polyvinyl pyrrolidone resin, polyether sulfone resin and the like can be used alone or two or more thereof as a mixture.

When the matrix resin is polypropylene or vinyl chloride resin, an epoxy resin is preferably used among these resins from the viewpoint of interfacial adhesion strength with the carbon fibres.

With respect to the carbon fibre bundle to which the sizing agent of the present invention is adhered, a sizing agent may be separately applied to the carbon fibre bundle to which no sizing agent is adhered, or commercially available carbon fibres with a sizing agent may be used as they are. Commercially available carbon fibres with a sizing agent include TC-33, TC-35, and TC-55 manufactured by Formosa.

In the present invention, the amount of the sizing agent attached to the carbon fibre bundles is not particularly limited, but the sizing agent is usually 0.01 to 10.0 % by mass, preferably 0.1 to 7.0 % by mass, more preferably 0.5 to 5.0 % by mass, and further preferably 1.0 to 3.0 % by mass based on the carbon fibre bundles.

When the amount of the sizing agent attached to the carbon fibre bundles is within the above ranges, particles are easily adhered to the carbon fibres, and impregnation of the matrix resin and interfacial adhesion strength tend to improve.

### (Particles)

As for the particles used in the present invention, both organic particles and inorganic particles can be used. As the organic particles, any particles composed of a thermoplastic resin or a thermosetting resin can be used as long as they are uneasily deformed by pressure and temperature at which the matrix resin is impregnated into the opened carbon fibre bundle, and examples thereof include a divinylbenzene crosslinked polymer, phenolic resin, polyamide resin, polyacrylic resin, acryl-styrene copolymer, epoxy resin, polyacrylonitrile resin, benzoguanamine resin, polyester resin, polyurethane resin, melamine resin and the like. Among these, particles composed of a divinylbenzene crosslinked polymer, phenolic resin, polyamide resin, polyacrylic resin, acryl-styrene copolymer, and epoxy resin can be suitably used because the particles are uneasily deformed when heated and pressurized. Examples of the inorganic particles include silica particles, alumina particles, titanium oxide particles, and carbon particles such as amorphous carbon. One of these particles may be used alone or two or more in combination. Among these particles, silica particles are preferably used from the viewpoint of affinity with the matrix resin and the sizing agent, and thermal deformation properties.

The amount of particles attached to the opened carbon fibre bundles is usually 0.1 to 10 % by mass, preferably 0.5 to 6 % by mass, and more preferably 1 to 3 % by mass on the basis of the opened carbon fibre bundles. When the amount of particles attached to the opened carbon fibre bundles is equal to or higher than the lower limit, the carbon fibre bundles can be appropriately opened. When the amount of particles attached to the opened carbon fibre bundles is equal to or lower than the upper limit, it is possible to suppress reduction in mechanical properties accompanied by reduction in fibre content rate due to excessive inclusion of coating particles in the opened carbon fibre bundles.

The average particle size of the particles is preferably 1 to 30 µm, more preferably 2 to 20 µm, further preferably 3 to 15 µm, and particularly preferably 4 to 10 µm. When the average particle size of the particles is equal to or larger than the lower limit, the fibres are sufficiently opened by the particles. When the average particle size of the particles is equal to or smaller than the upper limit, the particles easily enter between the carbon fibres in each fibre bundle. The average particle size of the particles means the median diameter (d50) measured by the laser diffraction method.

Also, a sieve or the like may be used to remove the particles having a particle size that does not contribute to fibre opening between the carbon fibres.

The particles used in the present invention preferably have a frequency of particles of 10 µm or more on a volume basis of 5 % or less, and more preferably 1 % or less. The particles used in the present invention preferably have a frequency of particles of 1 µm or more on a volume basis of 5 % or less, and more preferably 1 % or less.

When the frequency of particles on a volume basis is within the above ranges, particles that cannot enter inside the fibre bundle or particles that do not contribute to the fibre opening are reduced, and therefore impregnation property of the matrix resin and the physical properties of the resulting fibre reinforced composite material tend to improve.

It is preferable that at least a part of the spaces between the carbon fibres of the opened carbon fibre bundle in the present invention be 1 µm or more, preferably 3 µm or more, and more preferably 5 µm or more. When the distance between the carbon fibres is within the above ranges or more, the matrix resin tends to impregnate easily into the center of the opened fibre bundle by utilizing the space between the fibres.

### (Organic Solvent)

The organic solvents used in the present invention are not particularly limited as long as they are known; however, preferred from the viewpoint of dispersing a carbon fibre bundle adhered by electrostatic interaction and impregnating particles into the inside of the fibre bundle, are alcohols having 1 to 10 carbons such as methanol, ethanol, propanol, isopropanol, n-butyl alcohol, and t-butyl alcohol; ketones having 1 to 6 carbons such as acetone, methyl ethyl ketone, and methyl isobutyl ketone; sulfoxides having 1 to 10 carbons such as dimethylformamide, dimethylacetamide, and dimethylsulfoxide; esters having 1 to 6 carbons such as ethyl acetate and n-butyl acetate; ethers having 1 to 10 carbons such as diethyl ether and tetrahydrofuran; halogenated hydrocarbons having 1 to 6 carbons such as methylene chloride and chloroform, and methanol, ethanol, acetone, tetrahydrofuran, chloroform, dimethyl sulfoxide, and ethyl acetate that are capable of softening or dissolving the sizing agent. One of these may be used alone or two or more are possible in combination. Preferred from the viewpoint of work environment for workers are methanol, ethanol, propanol, and acetone.

The organic solvent used in the present invention may be an aqueous solution containing an organic solvent component and water. In the case of an aqueous solution, water concentration contained in 100 % by mass of the aqueous solution is usually 5 to 95 % by mass, preferably 10 to 80 % by mass, more preferably 20 to 70 % by mass, further preferably 30 to 60 % by mass, and most preferably 35 to 55 % by mass.

When the water concentration in the organic solvent is not more than the upper limit, the sizing agent on the carbon fibre surface tends to be prevented from completely dissolving in the organic solvent, and when the water concentration is not less than the lower limit, the sizing agent softens and the particles tend to easily adhere to the carbon fibre surface.

The content of the organic solvent component and other components other than water in the organic solvent to be used in the present invention is usually 10 % by mass or less, preferably 1 % by mass or less, more preferably 0.1 % by mass or less, and most preferably only the organic solvent component and water. Inevitable impurities contained in the organic solvent are also included in the organic solvent component (for example, residual substances in 99.9 % anhydrous ethanol).

In particular, when a monomer component as a polymerization raw material is contained, there is a risk that no adhesion occurs of the particles because of copolymerization with the sizing agent or coating by the other resins onto the sizing agent surface; therefore, it is preferable that no monomer component is contained in the organic solvent.

### [Method for Producing Opened Carbon Fibre Bundles]

The method for producing an opened carbon fibre bundle of the present invention comprises a step of bringing a carbon fibre bundle comprising a plurality of carbon fibres to which a sizing agent is attached into contact with a fibre opening solution obtained by adding particles to an organic solvent. Hereinafter, the present production method will be described in more details.

The fibre opening solution used in the present invention is a solution comprising the above-described organic solvent and particles. The content of the particles contained in the fibre opening solution is usually 0.1 parts by mass or more, preferably 1 part by mass or more, more preferably 2 parts by mass or more, further preferably 3 parts by mass, based on 100 parts by mass of the organic solvent. On the other hand, the upper limit is usually 50 parts by mass or less, preferably 30 parts by mass or less, and more preferably 10 parts by mass or less. When the content of the particles contained in the fibre opening solution is within the above ranges, resin impregnation properties of the opened carbon fibre bundle improve, and mechanical strength of the fibre reinforced composite material to be obtained tends to improve.

Examples of the method for bringing the carbon fibre bundle into contact with the fibre opening solution include a method for immersing the carbon fibre bundle in the fibre opening solution and a method for applying or spraying the fibre opening solution onto the carbon fibre bundle. The method for immersing the carbon fibre bundle in the fibre opening solution is preferably used from the viewpoint of dispersibility of the carbon fibre bundle.

When the method of immersing a carbon fibre bundle in a fibre opening solution is employed, the amount of the fibre opening solution is usually 1 times or more, preferably 2 times or more, and more preferably 8 times or more the total mass of the carbon fibres to be immersed. On the other hand, the upper limit is usually 10000 times or less, preferably 1000 times or less, and more preferably 100 times or less the total mass of the carbon fibres to be immersed.

When the amount of the fibre opening solution with respect to the carbon fibres is within the above ranges, the sizing agent dissolved in the fibre opening solution tends to solidify during drying, which aids in adhering the particles.

When the method for applying the fibre opening solution onto the carbon fibre bundle is used, the amount of the fibre opening solution is usually 0.01 times or more, preferably 0.1 times or more, and more preferably 0.5 times or more with respect to the total mass of the carbon fibres to be immersed. On the other hand, the upper limit of the fibre opening solution is usually 5 times or less, preferably 3 times or less, and more preferably 1 time or less, with respect to the total mass of the carbon fibres to be immersed. When the amount of fibre opening solution based on the carbon fibres is within the above ranges, the carbon fibre bundle to which the opening solution is applied tends to be prevented from getting twisted.

The temperature at which the fibre opening solution is brought into contact is not particularly limited, and is usually 10 to 50°C, preferably 15 to 35 °C, and more preferably 20 to 25°C. As the temperature of the fibre opening solution is higher, the sizing agent tends to be softened more easily, but the cost for maintaining the temperature increases.

The time for bringing the fibre opening solution into contact with the carbon fibre bundles can be conveniently adjusted according to the type of the sizing agent, and is usually 0.1 second or more, preferably 1 second or more, and more preferably 10 seconds or more. On the other hand, the upper limit thereof is usually 60 minutes or less, preferably 30 minutes or less, and more preferably 15 minutes or less. When the contact time is within the above range, the sizing agent softens and the complete dissolution of the sizing agent into the fibre opening solution tends to be suppressed.

A drying step may optionally be added after the carbon fibre bundle is brought into contact with the fibre opening solution. The temperature of the drying step is usually 10 °C or higher, preferably 20 °C or higher, more preferably 40 °C or higher, and further preferably 60 °C or higher. On the other hand, the upper limit of the drying step is usually 400 °C or lower, preferably 300 °C or lower, and more preferably 200 °C or lower. When the drying temperature is within the above ranges, the sizing agent tends to converge on the interface between the particles and the carbon fibre when the fibre opening solution is evaporated, and the particles tend to adhere to the carbon fibre surface.

The drying time in the drying step is not particularly limited, but is usually 10 seconds or more, preferably 30 seconds or more, and more preferably 1 minute or more. On the other hand, the upper limit is usually 200 minutes or less, preferably 100 minutes or less, and more preferably 30 minutes or less. When the drying temperature is within the above ranges, the sizing agent tends to converge on the interface between the particles and the carbon fibre when the fibre opening solution is evaporated, and the particles tend to adhere to the carbon fibre surface.

### [Fibre Reinforced Composite Material]

The fibre reinforced composite material of the present invention comprises the above-described opened carbon fibre bundle and a matrix resin impregnated in the opened carbon fibre bundle. The matrix resin may be either a thermosetting resin or a thermoplastic resin, and is preferably a thermoplastic resin from the viewpoint of impregnation properties and imparting excellent flexural modulus and bending strength to the fibre reinforced composite material.

Examples of the thermoplastic resin include polyolefin resins, acrylic resins, polyamide resins, polycarbonate resins, vinyl chloride resins, aromatic polyether ketones, and the like, and preferred are polyolefin resins having an excellent balance between viscosity and mechanical properties affecting the impregnation between fibres when impregnated, vinyl chloride resins having excellent chemical resistance but high viscosity, and aromatic polyether ketones having excellent heat resistance. From the viewpoint of mechanical properties and chemical resistance of the resulting fibre reinforced composite material, polyolefin resins and vinyl chloride resins are preferably used.

Examples of the polyolefin resins include polyethylene resins and polypropylene resins.

Polyethylene resins are not particularly limited, and examples thereof include low density polyethylene resins, medium density polyethylene resins, high density polyethylene resins, linear low density polyethylene resins, linear medium density polyethylene resins, and linear high density polyethylene resins.

Polypropylene resins are not particularly limited, and examples thereof include propylene homopolymers and copolymers of propylene and another olefin. The copolymers of propylene and the other olefin may be either block copolymers or random copolymers.

Examples of the olefin to be copolymerized with propylene include α-olefins such as ethylene, 1-butene, 1-pentene, 4-methyl-1-pentene, 1-hexene, 1-octene, 1-nonene, and 1-decene.

Examples of the aromatic polyether ketone include polyether ether ketone, polyether ketone ketone and the like, and polyether ether ketone is preferably used from the viewpoint of heat resistance and mechanical properties.

Examples of the thermosetting resins include epoxy resins, unsaturated polyester resins, phenol resins, melamine resins, and polyurethane resins, and preferred are the unsaturated polyester resins and the epoxy resins.

The content of the opened carbon fibre bundle in the fibre reinforced composite material is preferably 10 to 70 % by mass, more preferably 20 to 60 % by mass, further preferably 30 to 50 % by mass. The content of the matrix resin in the fibre reinforced composite material is preferably 30 to 90 % by mass, more preferably 40 to 80 % by mass, further preferably 30 to 60 % by mass.

The method for impregnating the opened carbon fibre bundle with the matrix resin is not particularly limited. For example, mention can be made to a method in which a molten resin is extruded into a film form using a sheet die or the like, laminated on a fibre-opened carbon fibre bundle, and then compressed while being heated to impregnate the matrix resin into the opened carbon fibre bundle (film impregnation method), an extrusion molding method for pulling out the matrix resin and carbon fibre from the die at once, and preferred from the viewpoint of productivity is the film impregnation method.

### (Presumption of action)

Compatibility with the matrix resin is improved by using the open fibre bundle of the present invention. A hypothesis is presented below regarding the reason for this.

It is considered that in the opened carbon fibre bundle of the present invention, the carbon fibre bundle is sufficiently opened by the particles, whereby the impregnation property of the matrix resin is improved, and as a result, the mechanical properties of the resulting fibre reinforced composite material are also improved. However, since sufficient physical properties were not obtained even when the carbon fibre including the sizing material was integrated with the thermoplastic resin after being brought into contact with water containing the particles, it is presumed that impregnation property is insufficient only by introducing the particles between the fibres.

In the present invention, the sizing agent used in many grades of commercially available carbon fibres is brought into contact with an organic solvent that can be softened or dissolved, whereby the sizing agent attached to the carbon fibres functions as an adhesive between the particles and the carbon fibres, and as a result, it is presumed that the particles introduced between the fibres maintain the open state during the subsequent drying step and the heating and pressurizing step when impregnating the matrix resin, thereby improving the mechanical properties of the resulting fibre reinforced composite material.

### EXAMPLES

Hereinafter, the invention will be described in more details with reference to the Examples, but the invention shall not be limited by these Examples.

### <Ingredients>

### [Carbon Fibre Bundle]

3K woven fabric: product name "EC3C" manufactured by Taiwan Plastics Co., Ltd. (PAN-based carbon fibre bundles, sizing material: epoxy resin, number of filaments: 3000, weight per unit area: 200 g/m², thickness: 0.19 mm, plain weave)

### [Particles]

Particles 1: Silica particles (product name "ESPHERIQUE N15", manufactured by JGC Catalysts and Chemicals Ltd., average particle size 6 µm, specific surface area 5 m²/g)

Particles 2: Carbon particles (product name "BELL PEARL CR2-800", manufactured by AIR WATER INC., average particle size 5.4 µm)

Particles 3: Resin particles (product name "MICROPEARL SP-210", manufactured by Sekisui Chemical Co., Ltd., average particle size 10.0 µm)

### [Resin Film]

PP1: PP film formed after melt-kneading 100 parts by weight of product name "J108M" (homopolypropylene resin) manufactured by Prime Polymer Co., Ltd. and 10 parts by weight of product name "Umex 1010" (acid-modified polypropylene) manufactured by Sanyo Chemical Industries, Ltd. in an extruder.

PVC1: PVC film formed of a vinyl chloride resin (polymerization degree: 400) manufactured by Tokuyama Sekisui Industry Co., Ltd.

### [Example 1-1]

Ethanol water having an ethanol concentration of 40 % by mass was fabricated by mixing 60 mass parts of ethanol and 40 mass parts of distilled water.

Next, 5 mass parts of Particles 1 were added to the ethanol water to prepare Fibre opening solution 1.

Subsequently, a 3K woven fabric (carbon fibre bundles) was prepared, and a fibre opening solution 0.75 times the weight of the carbon fibre bundles was applied to the carbon fibre bundles, followed by heating at 300 °C for 2 minutes and drying.

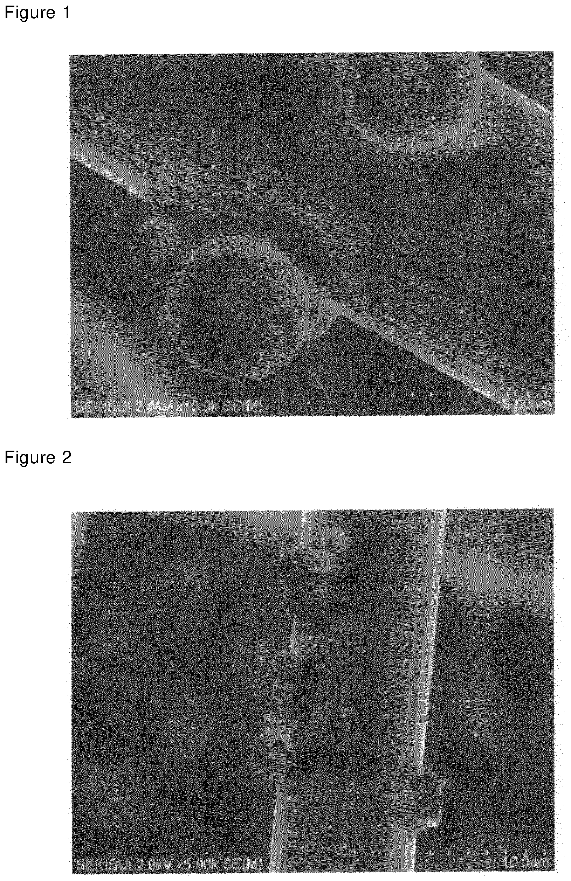

FIGS. 1 and 2 show enlarged photographs of the thus-obtained opened carbon fibre bundles observed by a scanning electron microscope. It can be seen that Particles 1 (silica particles) of the opened carbon fibre bundles are covered with a sizing agent and adhered to the surface of the carbon fibre.

Both sides of the obtained opened carbon fibre bundle are laminated with two PP1 films and then compressed at a pressure of 2 MPa for 3 minutes while being heated to 200 °C, thereby impregnating the reinforced fibre bundle with a polypropylene resin to obtain a carbon fibre reinforced composite material (prepreg) having a thickness of 250 µm and a carbon fibre content (volume%) in the fibre reinforced composite of 50%.

### <Bending Strength>

A plurality of the obtained carbon fibre reinforced composite materials were laminated and integrated by heat fusion to produce test pieces, and the bending strength of the test pieces was measured in accordance with JIS K7074. The results are shown in Table 1.

### [Comparative Example 1-1]

The fibre opening treatment and the impregnation with the matrix resin were carried out in the same manner as in Example 1-1 except that the fibre opening solution was changed to a fibre opening solution obtained by mixing Particles 1 in 100 parts by mass of water, and the bending strength of the resulting carbon fibre reinforced composite material was evaluated. The results are shown in Table 1.

### [Example 2-1]

A carbon fibre reinforced composite material was produced in the same manner as in Example 1-1 except that the matrix resin was changed from PP1 to PVC1, and the bending strength was evaluated. The results are shown in Table 1.

### [Comparative Example 2-1]

A carbon fibre reinforced composite material was produced in the same manner as in Comparative Example 1-1 except that the matrix resin was changed from PP1 to PVC1, and the bending strength was evaluated. The results are shown in Table 1.

### [Example 3-1]

A carbon fibre reinforced composite material was produced in the same manner as in Example 1-1 except that Particles 1 were changed to Particles 2, and the bending strength was evaluated. The results are shown in Table 1.

### [Example 4-1]

A carbon fibre reinforced composite material was produced in the same manner as in Example 1-1 except that Particles 1 were changed to Particles 3, and the bending strength was evaluated. The results are shown in Table 1.

**[Table 1]**

| | Carbon Fibre Bundle | Matrix Resin | Composition of Fibre opening solution (parts by weight) | Proportion of Particles (parts by weight) | Bending Strength (MPa) |
|---|---|---|---|---|---|
| Ex. 1-1 | 3K woven fabric | PP1 | Ethanol 60: Water 40 | 5 | 349 |
| Comp Ex. 1-1 | 3K woven fabric | PP1 | Water 100 | 5 | 309 |
| Ex. 2-1 | 3K woven fabric | PVC1 | Ethanol 60: Water 40 | 5 | 487 |
| Comp. Ex. 2-1 | 3K woven fabric | PVC1 | Water 100 | 5 | 401 |
| Ex. 3-1 | 3K woven fabric | PP1 | Ethanol 60: Water 40 | 5 | 637 |
| Ex. 4-1 | 3K woven fabric | PP1 | Ethanol 60: Water 40 | 5 | 434 |

From the above evaluation results, it can be seen that a carbon fibre bundle obtained by bringing the carbon fibres to which a sizing agent is attached into contact with a fibre opening solution containing only water and particles does not have sufficient fibre opening so that it has a poor impregnation portion and the bending strength of the fibre-reinforced resin composite material is insufficient.

On the other hand, it can be seen that a simple process of bringing the carbon fibres to which an epoxy sizing agent is attached into contact with a fibre opening solution containing ethanol water and particles made sufficient fibre opening of the carbon fibre bundle and as a result, the bending strength of the fibre-reinforced resin composite material obtained was greatly improved.

### [Example 5-1]

As described above, since it is important in the present invention to bring the sizing agent attached to the carbon fibre into contact with an organic solvent which softens or dissolves thereof, a dissolution test was carried out by immersing an epoxy resin which is a typical sizing agent in various solvents.

As an organic solvent, an ampule bottle containing 10g each of hexane, toluene, ethyl acetate, acetonitrile, dimethyl sulfoxide, acetic acid, 1-propanol and ethanol was prepared.

Next, 0.1g of an epoxy resin (product name : jER Basic Solid Type 1004, manufactured by Mitsubishi Chemical Co., Ltd.) is immersed in an ampule bottle containing 10g of the organic solvent as above, allowed to stand at room temperature for 24 hours, and then the content was visually confirmed.

As a result, no solid matter was found in the ampule bottles containing ethyl acetate, acetonitrile, dimethyl sulfoxide and acetic acid. In addition, although solid matter was found in the ampule bottles containing toluene, 1-propanol and ethanol, the shape was greatly changed. In addition, no change was found in the solid matter in the ampule bottle containing hexane before and after the immersion.

Therefore, it is considered that a solvent containing ethyl acetate, acetonitrile, dimethyl sulfoxide, acetic acid, toluene, 1-propanol and ethanol can dissolve or soften the epoxy resin as the sizing agent, and the effect of the present invention can be obtained.

## Claims

1. A method for producing an opened carbon fibre bundle comprising the step of bringing a carbon fibre bundle comprising a plurality of carbon fibres to which a sizing agent is attached into contact with a fibre opening solution comprising particles having an average particle size (d50) of 1 µm to 30 µm and an organic solvent.

2. The method for producing an opened carbon fibre bundle according to claim 1, wherein the sizing agent comprises an epoxy resin.

3. The method for producing an opened carbon fibre bundle according to claim 1 or 2, wherein the particles comprise at least one selected from the group consisting of silica particles, alumina particles, talc and amorphous carbon particles.

4. The method for producing an opened carbon fibre bundle according to any one of claims 1 to 3, wherein the organic solvent comprises at least one selected from the group consisting of alcohols having 1 to 10 carbon atoms, ketones having 1 to 6 carbon atoms, sulfoxides having 1 to 10 carbon atoms, esters having 1 to 6 carbon atoms, ethers having 1 to 10 carbon atoms and halogenated hydrocarbons having 1 to 6 carbon atoms.

5. An opened carbon fibre bundle wherein particles having an average particle size (d50) of 1 µm to 30 µm are adhered to the surface of the carbon fibre by a sizing agent.

6. An opened carbon fibre bundle according to claim 5, wherein the sizing agent comprises an epoxy resin.

7. A fibre reinforced composite material comprising an opened carbon fibre bundle according to claim 5 or 6 and a matrix resin impregnated into the opened carbon fibre bundle.

8. The fibre reinforced composite material according to claim 7, wherein the matrix resin comprises at least one selected from the group consisting of a polyolefin resin, a vinyl chloride resin, and a polyether ether ketone resin.
